# EUROPEAN PATENT APPLICATION

(11) **EP 4 461 933 A1**
(43) Date of publication of application: **13.11.2024**
(21) Application number: 23199003.7
(22) Date of filing: 22.09.2023
(51) Int. Cl.: F01P 3/18, B60K 11/04, F01P 11/06, F01P 11/08, F02B 29/04

(54) **CLEANABLE OPEN-CLOSE SYSTEM COOLING MODULE FOR CONSTRUCTION MACHINES**

(30) Priority: 12.05.2023 TR 202305308
(71) Applicant: Kale Oto Radyator Sanayi Ve Ticaret Anonim Sirketi, 41400 Kocaeli (TR)
(72) Inventor: YILDIZ, TIMUR, KOCAELI (TR)
(74) Representative: Yamankaradeniz, Kemal

(57) **Abstract**

The invention relates to a cooling module having a locking mechanism which ensures that cooling products such as radiators and intercoolers in construction machines operating in dirty, dusty environments are completely free from dirt and dust.

## Description

### Technical Field

The invention relates to a cooling module with a cleanable system for construction machines.

In particular, the invention relates to a cooling module having a locking mechanism which ensures that cooling products such as radiators and intercoolers in construction machines operating in dirty and dusty environments are completely free from dirt and dust.

### State of the Art

The cooling modules used in today's construction machines include radiator, intercooler and oil cooler products. The mentioned products are connected to each other with connection brackets. Cooling modules have wireframe windows for air flow.

As it is known, construction machines operate in dusty and dirty ambient conditions. For this reason, the honeycomb structure of the radiator and other components in the module can be filled with dust, dirt, etc. factors. There are fins in the honeycomb structure of cooling products. Air flow takes place in the fins. Filling of the honeycomb with dust, dirt, etc. affects the air flow. Since blocking the air flow will affect the performance, a fan with both traction and suction feature is preferred in construction machines or the air is cleaned by holding the air from the reverse side of the module. The fan option causes extra cost and power consumption, while the other option causes extra labour expenditure and the product remaining on the back side cannot be cleaned completely.

As a result of the research on the subject, application numbered TR 2007/08909 was found. The relevant document relates to a set of brackets that facilitates the installation of the cooling module used to cool vehicle engines in the automotive industry and absorbs vibrations transmitted from the chassis to the module. However, there is no mention of a open-close cooling module.

As a result, due to the above-mentioned disadvantages and the inadequacy of the existing solutions, a development in the relevant technical field has become necessary.

### Aim of the invention

The invention is inspired by the present invention and aims to solve the above-mentioned problems.

The main aim of the invention is to provide a cooling module with a locking mechanism that enables cooling products such as radiators and intercoolers in construction machines operating in dirty, dusty environments to be completely free from dirt and dust.

The other aim of the invention is to enable the cooling module to be used in the 0°to 12° position thanks to the connection brackets and locking mechanism it contains. In this way, in the 12°position, only air is held and the cleaning process is carried out.

Another aim of the invention is to provide a space for cleaning the honeycomb and fin structure of cooling products such as radiators and intercoolers by supplying air. In this way, the performance and fatigue life of the cooling module is also maintained.

In order to fulfil the above-mentioned purposes, the invention is a cooling module which enables the cooling products such as radiator, intercooler and oil cooler mounted to each other in construction machines operating in dirty, dusty environments to be completely free from dirt and dust with its retractable structure, characterized by comprising;
- A connection bracket that enables one side of the oil cooler to be connected to the radiator and intercooler mounted side by side with fasteners and
- At least one locking mechanism that ensures that the oil cooler positioned on the radiator and intercooler is locked while the construction machines is operating, and that it is stopped by being lifted up at an angle with the horizontal in case of cleaning.

The structural and characteristic features and all advantages of the invention will be more clearly understood by means of the figures given below and the detailed description written by making references to these figures, and therefore, the evaluation should be made by taking these figures and detailed description into consideration.

### Figures to Help Understand the Invention

- **Figure** 1: is a top perspective view of the inventive cooling module.
- Figure 2: is a side perspective view of the inventive cooling module.

### Description of Parts References

- 10.: Intercooler
- 20.: Fin
- 30.: Oil cooler
- 31.: Oil cooler guard sheet
- 40.: Radiator
- 41.: Radiator side sheet
- 50.: Connection bracket
- 60.: Locking mechanism
- 70.: Tube

### Detailed Description of the Invention

In this detailed description, the preferred embodiments of the inventive cooling module are described only for a better understanding of the subject matter.

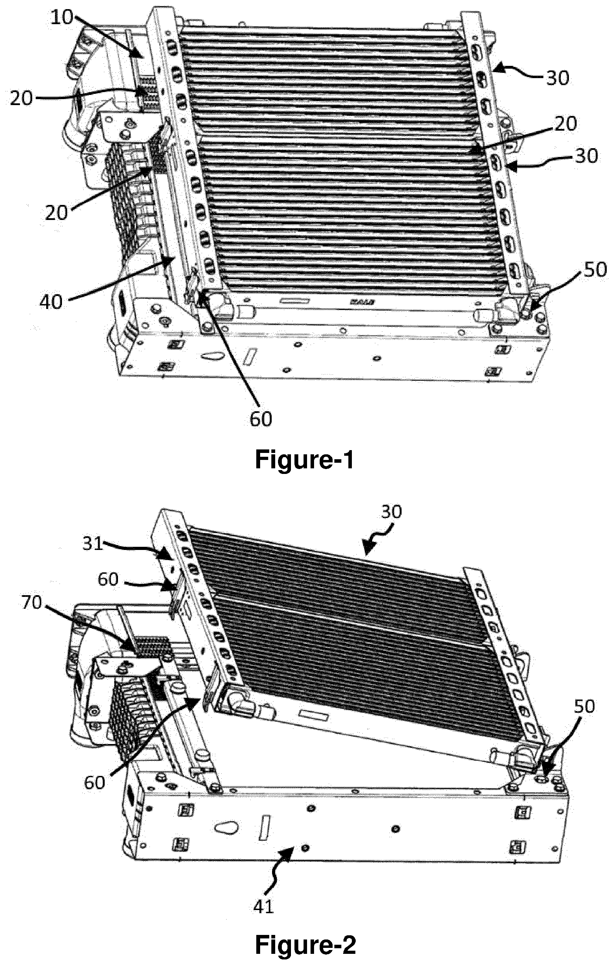

The cooling module of the cleanable open-close system for construction machines, whose general view is given in Figure 1, generally comprises radiator (40), intercooler (10) and oil cooler (30) fixed on these cooling products with connection bracket (50), fin (20) and tube (70) in the honeycombs of the mentioned products. The said intercooler performs air cooling function. The radiator, which is positioned side by side with the intercooler, provides cooling of the engine. The mentioned oil coolers are mounted on the upper part of the intercooler and radiator with bolts and sheets. In addition, there are preferably two oil coolers and they are connected to each other with oil cooler guard sheets.

The subject matter of the invention is a cooling module which enables the cooling products such as radiator (40), intercooler (10) and oil cooler (30) mounted to each other in construction machines operating in dirty, dusty environments to be completely cleaned from dirt and dust with its open-close structure; it includes a connection bracket (50) which enables the oil cooler (30) to be connected to the radiator (40) and intercooler (10) mounted side by side to each other with fasteners. In addition, the oil cooler (30) positioned on the radiator (40) and the intercooler (10) comprises at least one locking mechanism (60) which enables the oil cooler (30) to be locked and, in case of cleaning, to be lifted upwards at an angle with the horizontal. Said angle with the horizontal is preferably in the range of 0°to 12°.

The subject matter of the inventive is a cooling module which comprises an oil cooler guard sheet (31), on which locking mechanisms (60) are positioned, for holding two oil coolers (30) together. Furthermore, it comprises a radiator side sheet (41) for connecting said cooling module to the vehicle. Also, the radiator (40) has fins (20) which are located in the honeycombs of the cooling products such as the intercooler (10) and the oil cooler (30) and provide air flow.

The aim of the invention is to increase the life and efficiency of the cooling modules in construction machines. As mentioned, this aim is carry out by an oil cooler (30) which can be positioned on the radiator (40) and intercooler (10) products, one part of which is fixed and the other part of which can be positioned at an angle. One side of the said oil cooler (30) is fixed to the radiator (40) and intercooler (10) by means of connection brackets (50), and on the other side, an opening in the range of 0°to 12° is provided depending on the opening and closing of the locking mechanism (50) located on the oil cooler guard sheet (31). When the work machines are in operation, the locking mechanism (60) is closed and the connection brackets are at 0°. After the work machines are running, the locking mechanism (60) is opened and the connection brackets (50) are opened to the 12° position so that the cooling modules can be completely cleaned from dirt and dust. In this way, a space is opened for the product to be cleaned by giving air to the honeycomb and fin structure of the product. In this case, the relevant product is cleaned and the honeycomb and fin structure of the product is protected and thus the performance and fatigue life of the cooling module is also protected.

## Claims

1. A cooling module that enables the cooling products such as radiator (40), intercooler (10) and oil cooler (30) mounted to each other in construction machines operating in dirty, dusty environments to be completely free from dirt and dust with its retractable structure, **characterized by comprising;**
- A connection bracket (50) that enables one side of the oil cooler (30) to be connected to the radiator (40) and intercooler (10) mounted side by side with fasteners and
- At least one locking mechanism (60) that ensures that the oil cooler (30) positioned on the radiator (40) and intercooler (10) is locked while the construction machines is operating, and that it is stopped by being lifted up at an angle with the horizontal in case of cleaning.

2. A cooling module according to claim 1, **characterized in that**; the angle of the oil cooler (30) between the radiator (40) and the intercooler (10) is between 0°and 12°.

3. A cooling module according to claim 1, **characterized by** comprising; an oil cooler guard sheet (31) on which locking mechanisms (60) are positioned to hold two oil coolers (30) together.

4. A cooling module according to claim 1, **characterized by** comprising; said cooling module comprises a radiator side sheet (41) for connecting said cooling module to the vehicle.

5. A cooling module according to claim 1, **characterized by** comprising; a fin (20) which is located in the honeycombs of cooling products such as radiator (40), intercooler (10) and oil cooler (30) and provides air flow.
